Europäisches Patentamt

European Patent Office

Office européen des brevets

(19)

(11) **EP 1 069 967 B1**

(12) **FASCICULE DE BREVET EUROPEEN**

(45) Date de publication et mention
de la délivrance du brevet:
**18.02.2004 Bulletin 2004/08**

(51) Int Cl.[7]: **B23K 35/02**, B23K 35/14,
B22F 1/02, C23C 18/00

(21) Numéro de dépôt: **99909024.4**

(22) Date de dépôt: **17.03.1999**

(86) Numéro de dépôt international:
**PCT/FR1999/000608**

(87) Numéro de publication internationale:
**WO 1999/052671 (21.10.1999 Gazette 1999/42)**

(54) **POUDRE COMPOSITE POUR BRASAGE-DIFFUSION**

VERBUNDPULVER ZUM DIFFUSIONSHARTLÖTEN

COMPOSITE POWDER FOR DIFFUSION-WELDING

(84) Etats contractants désignés:
**AT DE ES FR GB IT NL SE**

(30) Priorité: **09.04.1998 FR 9804469**

(43) Date de publication de la demande:
**24.01.2001 Bulletin 2001/04**

(73) Titulaire: **ONERA (Office National d'Etudes et de
Recherches Aérospatiales)
92320 Châtillon (FR)**

(72) Inventeur: **JOSSO, Pierre
92300 Issy-les-Moulineaux (FR)**

(74) Mandataire: **Rousset, Jean-Claude
Cabinet Netter
36, avenue Hoche
75008 Paris (FR)**

(56) Documents cités:
**EP-A- 0 440 093        US-A- 4 059 217
US-A- 4 997 686        US-A- 5 523 170**

• **PATENT ABSTRACTS OF JAPAN vol. 017, no.
603 (M-1505), 5 novembre 1993 & JP 05 179303
A (PENTEL KK), 20 juillet 1993**
• **PATENT ABSTRACTS OF JAPAN vol. 009, no.
303 (M-434), 30 novembre 1985 & JP 60 141801
A (NIPPON KOGYO KK), 26 juillet 1985**

**Description**

L'invention concerne une poudre composite, un procédé de fabrication de celle-ci et une utilisation de la poudre pour la réparation par brasage-diffusion d'une pièce fissurée, notamment d'une pièce de moteur aéronautique en superalliage à base de nickel et/ou de cobalt.

Le prix de revient des pièces de rechange constitue un facteur important dans le coût de la maintenance des moteurs aéronautiques. Afin de le minimiser, diverses techniques de réparation des pièces en superalliages usagées ont été développées ces dernières années. En effet, malgré la complexité des techniques de régénération des aubes fixes, le coût d'un composant réparé peut-être de 3 à 10 fois plus faible que le prix de revient d'une pièce neuve. On peut citer, à ce sujet, un article général écrit par J.-P. Huchin dans la revue "Soudage et Techniques Connexes", vol. 48, n°7/8, pp. 48-55 (1994), et intitulé "Le brasage-diffusion dans le Groupe SNECMA".

Pour être fiable, la technique de réparation doit permettre de colmater les fissures et de recharger les parties endommagées tout en leur conférant des caractéristiques mécaniques et métallurgiques comparables à celles du matériau de base. Enfin, les températures de mises en oeuvre d'une telle réparation doivent être compatibles avec le superalliage à réparer (températures inférieures à celle de brûlure du superalliage).

Seul le brasage-diffusion est susceptible de répondre à ces impératifs. Cette technique consiste à appliquer, sous forme de poudre de fine granulométrie, une brasure à base de nickel ou de cobalt sur les zones à réparer, et à porter l'ensemble "composant à réparer + poudre de brasage" quelques degrés au-dessus de la température de liquidus de la brasure jusqu'à solidification isotherme du joint brasé, solidification due à une diffusion des éléments fondants de la brasure (bore et/ou silicium) dans le superalliage. Cependant, la zone ainsi réparée ne présente pas une microstructure identique à celle du superalliage, et, par conséquent, une résistance mécanique à haute température (surtout en fluage) suffisante.

Les solutions de ce problème se classent en deux familles: les réparations par brasage-diffusion obtenues avec des brasures dont la composition est de type "superalliage + fondants", donc proche de celle du superalliage à réparer, et les réparations par brasage-diffusion obtenues avec une brasure traditionnelle mais renforcée par une poudre de composition équivalente à celle du superalliage à réparer.

À la première famille appartient le procédé S.A.L.I.D. (Super Alloy Liquid Interface Diffusion), décrit dans US-A-4 059 217 du 22 novembre 1977 et développé par la société RHOR Ind., qui utilise comme métal d'apport un dépôt chimique de nickel sur les surfaces des pièces à assembler. Le dépôt contient du phosphore ou du bore, selon le réducteur employé. Cette technique n'a, jusqu'à ce jour, été employée que sur des pièces massives (tôles, nids d'abeille, etc.).

Le procédé T.L.P. (Transient Liquid Phase), développé par la société Pratt & Whitney Aircraft, est décrit dans: "T.L.P. bonding: a new method for joining heat resistant alloys", Welding Journal, (4), pp. 203-214, 1974. Il consiste à utiliser un métal d'apport comprenant une matrice de composition identique à celle des pièces à assembler à l'exclusion des éléments titane et aluminium. Ce métal d'apport est additionné d'un fondant tel que le bore, qui peut être déposé sur un feuillard de 20 à 100 µm d'épaisseur par dépôt en phase vapeur ou par traitement thermochimique. L'opération de brasage consiste à porter les pièces à assembler entre 1095 et 1200 °C, en y interposant le feuillard revêtu, sous des pressions variant entre 10 et 70 MPa.

US-A-5 523 170, cédé à General Electric Company, décrit un procédé appelé A.D.B. (Activated Diffusion Bonding), qui fait également l'objet d'un article paru dans Welding Journal, (11), pp. 505-509, 1970 sous le titre "Activated Diffusion Bonding. A new joining process produces high strength joints in difficult-to-weld superalloys, including René 80". Ici aussi, les métaux d'apport utilisés ont des compositions voisines de celles des matériaux à assembler avec, en plus, des additions de bore et/ou de silicium. Après pulvérisation, le métal d'apport est déposé à la surface des pièces à assembler soit sous forme d'aggloméré de poudre soit par projection plasma. Ce type de brasure fond à température élevée (vers 1220 °C) et ne peut, de ce fait, être appliqué à tous les superalliages. Les liaisons obtenues ont une durée de vie, rapportée à celle des pièces à assembler, allant d'environ 65 % pour l'alliage dénommé René 80 à environ 100 % pour celui dénommé Udimet 700. Lorsque la géométrie des pièces ne permet pas d'appliquer une pression, la phase liquide du métal d'apport est suffisamment fluide pour remplir les jeux par capillarité. Dans ce cas, la valeur maximale admissible de ce jeu est de 0,25 mm.

Le procédé S.B.D. (Soudo Brasage-Diffusion), appartenant à la seconde famille, a été développé par la société Heurchrome, devenue entre temps Chromalloy France. Il a été mis au point pour réparer des alliages à base de cobalt, notamment celui dénommé X 40 (désignation normalisée KC25NW). Une poudre d'alliage de composition voisine de celle de ce superalliage était mélangée à une poudre de brasure à base de nickel utilisant le bore et le silicium comme éléments fondants. Le couple Ni/Co entraîne une homogénéisation accélérée du joint brasé et permet d'obtenir une bonne ductilité (absence de précipités de borures) et une bonne tenue à l'oxydation et à la corrosion à chaud (teneur en chrome élevée). Cependant, cette technique n'a pas été étendue aux superalliages à base de nickel.

La société SOCHATA a mis au point une technique similaire de renforcement du joint brasé fondée sur l'ajout de poudre de superalliage. Ce procédé appelé R.B.D. (Rechargement par Brasage-diffusion) consiste en l'utilisation d'une poudre cette fois-ci à deux composants:

- une brasure à base de nickel ou de cobalt contenant de 2 à 6 % en poids d'éléments fondants tels que le bore ou le silicium, et
- un élément de renfort constitué de poudres de superalliages de faible granulométrie, de même nature ou non que le substrat.

L'opération de brasage-diffusion est réalisée à une température comprise entre 1050 et 1200 °C. Le renfort en superalliage reste à l'état solide pendant toute la durée de l'opération, seule la brasure devient liquide autorisant ainsi, d'une part, un brasage des grains de poudres de superalliage entre eux et, d'autre part, la liaison de l'ensemble du joint brasé avec le superalliage substrat du composant réparé. Après interdiffusion des éléments, la teneur en élément fondants (bore et/ou silicium) dans le joint brasé reste relativement faible (< 1 %).

On obtient donc, grâce à ces techniques (R.B.D. et S.B.D.), et après les traitements thermiques d'usage (revenu, vieillissement), un composant dont les propriétés mécaniques à haute température sont proches de celles du matériau de base, et par voie de conséquence, un composant dont les propriétés mécaniques sont comparables à celles d'un composant neuf. De plus, la brasure, la poudre de renforcement et le substrat étant de compositions assez proches, il est possible de protéger ces composants par des revêtements usuels sans que ceux-ci donnent lieu à des incompatibilités.

Toutefois, des difficultés de mise en oeuvre de ces procédés existent. On peut noter, par exemple, que la mise au point d'une brasure spécifique à chaque type de substrats (cas des réparations obtenues par brasure seule) est une opération longue et coûteuse. Dans le cas des réparations obtenues par une brasure renforcée, l'opération de mélange des poudres de brasure et de superalliage est longue et fastidieuse, l'homogénéisation difficile de la composition chimique de ce mélange exige de nombreux contrôles (composition, aptitude à la fusion du mélange avant chaque utilisation, etc.). De plus, si cette dernière technique permet d'ajuster la fluidité de la partie liquide (par ajustement du rapport entre la quantité de poudre de brasure et la quantité de poudre de superalliage), il est difficile d'y ajouter des éléments permettant de renforcer les propriétés mécaniques, métallurgiques ou de résistance à la corrosion et/ou à l'oxydation à haute température de la brasure proprement dite.

Il est donc souhaitable d'utiliser non plus un mélange de poudres de superalliage et de brasure ou une brasure spécifique à un superalliage donné, mais une poudre de superalliage dont la surface des grains est rendue fusible à basse température par la présence d'éléments fondants.

Par ailleurs, des études métallurgiques ont montré que, lorsque le bore n'était pas associé à du silicium, les quantités de bore à introduire dans la brasure pour obtenir une fluidité suffisante pour l'application visée étaient prohibitives. Elles conduisaient, après réparation, à l'obtention de borures de métaux lourds (Mo, W, etc.) préjudiciables à la tenue mécanique de l'ensemble brasé, notamment en fluage. Il est donc également souhaitable que deux fondants différents puissent être présents à la surface des grains.

À cet effet, l'invention vise notamment une poudre composite dont chaque grain comprend un âme en une première matière enrobée d'un revêtement d'une seconde matière, la composition chimique de la première matière et la composition chimique de la seconde matière étant sensiblement constantes d'un grain à l'autre.

Selon l'invention, dans une partie au moins des grains représentant la majorité de la masse de la poudre, au moins une particule d'une troisième matière est incluse dans le revêtement, la composition chimique de la troisième matière étant sensiblement constante d'un grain à l'autre.

Des caractéristiques optionnelles de l'invention, complémentaires ou alternatives, sont énoncées ci-après:

- Au moins une particule de la troisième matière est incluse dans le revêtement de chaque grain.

- La première matière est un alliage métallique.

- La première matière est un superalliage à base de nickel et/ou de cobalt.

- La première matière est une céramique réfractaire.

- La seconde matière est une brasure propre à fondre dans un domaine de température où la première matière ne subit pratiquement aucune transformation physique ou chimique.

- La troisième matière est propre à fondre ou à réagir avec la seconde matière pour former une brasure à l'état liquide, dans un domaine de température où la première matière ne subit pratiquement aucune transformation physique ou chimique.

- La troisième matière contient du silicium en tant qu'élément fondant.

- Le revêtement est un dépôt chimique autocatalytique contenant du nickel et/ou du cobalt et un élément fondant choisi parmi le bore et le phosphore, obtenu à partir d'une solution contenant des ions nickel et/ou cobalt et un composé dudit élément fondant en tant que réducteur.

Pour obtenir une poudre monocomposant destinée à la réparation d'une pièce de moteur aéronautique en superalliage à base de nickel et/ou de cobalt, la technique selon l'invention consiste à enrober chaque grain de poudre d'un dépôt chimique autocatalytique de nickel-phosphore ou de nickel-bore. Cependant, dans les cas d'applications aéronautiques ou nucléaires (et seulement dans ces cas), le phosphore est à proscrire en raison de son influence néfaste sur les propriétés mécaniques et sur la résistance à l'oxydation ou à la corrosion à chaud des superalliages.

L'invention a donc également pour objet un procédé de fabrication d'une poudre telle que définie ci-dessus, dans lequel on met en suspension, avec agitation, des particules de la première matière et des particules de la troisième matière dans une solution contenant des ions nickel et/ou cobalt et les autres constituants nécessaires au dépôt autocatalytique à l'exception du réducteur, et on ajoute progressivement le réducteur de manière à former autour de chaque particule de la première matière un revêtement de la seconde matière, les particules de la troisième matière étant incluses dans ledit revêtement.

Le procédé selon l'invention peut comporter au moins certaines des particularités suivantes:

- La suspension agitée est contenue dans un récipient dont la paroi en contact avec elle est sensiblement sphérique.

- Lesdits autres constituants comprennent au moins un complexant desdits ions et au moins un stabilisant organique soluble dans l'eau ne contenant ni soufre ni aucun métal ou métalloïde des groupes IIIa (bore et aluminium exceptés), IVa (carbone excepté), Va (azote et phosphore exceptés), VIa (oxygène excepté) et VIIa (fluor et chlore exceptés), et possédant un doublet électronique pouvant être facilement capté par le nickel et/ou le cobalt.

- Le bain contient les constituants suivants:

source d'ions: chlorure de nickel
complexant: éthylènediamine
stabilisants: pentoxyde d'arsenic imidazole
agent d'alcalinité: hydroxyde de sodium,

le réducteur étant le borohydrure de sodium.

- Le bain est porté à une température d'environ 80 °C.

- Le réducteur est ajouté à une vitesse ne dépassant pas 0,07 gramme par heure et par gramme de particules en suspension.

L'invention vise encore l'utilisation, pour la réparation par brasage-diffusion d'une pièce fissurée, d'une poudre selon l'invention dont la seconde matière est une brasure propre à fondre dans un domaine de température où la première matière ne subit pratiquement aucune transformation physique ou chimique.

Selon l'invention, on remplit les fissures de poudre et on chauffe la pièce dans ledit domaine de température jusqu'à ce que la brasure, après avoir fondu, se solidifie de nouveau par suite de la diffusion de l'élément fondant dans la matière de l'âme et dans la matière de la pièce à réparer.

En particulier, la seconde matière peut être un alliage de nickel, et/ou de cobalt, et de bore, pour la réparation d'une pièce de moteur aéronautique en superalliage à base de nickel et/ou de cobalt.

Les caractéristiques et avantages de l'invention seront exposés plus en détail dans la description ci-après, en se référant aux dessins annexés, sur lesquels:

- la figure 1 est une représentation schématique d'un mécanisme connu pour l'obtention d'un dépôt composite sur un substrat;

- la figure 2 représente schématiquement un dispositif pour la mise en oeuvre du procédé selon l'invention; et

- la figure 3 est une représentation schématique d'un mécanisme de dépôt proposé en relation avec le procédé selon l'invention.

D'une manière générale, pour éviter l'inclusion d'une poudre à recouvrir dans un dépôt en cours de formation (par exemple au niveau des amenées de courant, en milieu aqueux, ou sur les parois du réacteur, en milieu gazeux), il faut choisir une technique de dépôt non directionnelle pouvant être mise en oeuvre sur un substrat finement divisé et maintenu en suspension (dispersion aqueuse ou lit fluidisé) dans le milieu de dépôt. Parmi toutes les techniques de revêtement possibles, les dépôts chimiques en milieu liquide peuvent conduire à un enrobage de chaque grain de poudre de manière simple et économique. Et parmi les dépôts chimiques autocatalytiques en milieu aqueux, seuls les dépôts de nickel-bore ou cobalt-bore conviennent à l'application aéronautique.

Cependant, dans le cas de l'utilisation de ce dépôt pour une application de brasage-diffusion, l'alliage nickel-bore obtenu devra être le plus pur possible (ne pas contenir d'impuretés telles que du soufre, du plomb, du thallium, etc.), avoir un point de fusion inférieur à 1200 °C et être facile à produire industriellement. Enfin il faut noter que, pour être utilisable pour une réparation de composants de parties chaudes de turbine aéronautique, le rapport poids du dépôt (brasure) sur poids du substrat (âme) doit pouvoir être réglé à la demande (typiquement entre 0,10 et 0,33). on notera que la présence d'éléments tels que Pb, Tl, S, etc. n'est une limitation que dans le cas d'un usage aéronautique ou nucléaire. En conséquence on doit admettre que la notion de pureté dépendra de l'application visée.

Si on examine le diagramme de phase binaire du nickel et du bore, on constate que le respect de la condition ci-dessus quant au point de fusion entraîne la nécessité pour le dépôt de nickel de contenir entre 12,8 % et 53,5 % de bore en atomes (soit entre 2,8 % et 11,7 % en masse). Dans ces conditions, seul un dépôt de nickel-bore obtenu en milieu basique peut convenir (teneur moyenne en bore comprise entre 4 et 7 % en masse ou entre 18 et 32 % en atomes). Il est à noter que ces valeurs sont proches de la composition eutectique $Ni_{83}B_{17}$ dont le point de fusion est de 1093 °C.

Les différentes conditions mentionnées plus haut sont satisfaites notamment par le bain de dépôt de nickel-bore décrit ci-après, conforme à FR-A-2 531 103. Sa formulation, reproduite dans le tableau 1, conduit à des dépôts de nickel d'une grande pureté et dont la teneur en bore est compatible avec l'application visée.

Tableau 1

| Constituants | Formules | Concentrations | |
|---|---|---|---|
| | | massiques | molaires |
| Chlorure de nickel hexahydraté | $NiCl_2, 6\ H_2O$ | 30 g/l | 0,13 M |
| Ethylènediamine | $C_2H_4(NH_2)_2$ | 60 g/l | 1 M |
| Pentoxyde d'arsenic | $As_2O_5$ | 150 mg/l | $6,5 \times 10^{-4}$ M |
| Imidazole | $C_3H_4N_2$ | 21 mg/l | $3 \times 10^{-4}$ M |
| Hydroxyde de sodium | NaOH | 40 g/l | 1 M |
| Borohydrure de sodium | $NaBH_4$ | 0,5 g/l | $1,3 \times 10^{-2}$ M |

Le stabilisant primaire (pentoxyde d'arsenic), permettant d'éviter la réduction homogène du nickel dans la solution de dépôt, présente l'avantage de ne pas être consommé au cours de la réaction de dépôt. Par contre, le stabilisant secondaire (imidazole), qui régule l'activité catalytique du dépôt de nickel, agissant par adsorption sur le dépôt en cours de formation, polluera ce dernier par un peu de carbone ou d'azote.

Lors de l'utilisation de ce bain sur des échantillons massifs, le dépôt de nickel-bore se construit à la vitesse d'environ 13 μm/h (= 10 mg.cm$^{-2}$.h$^{-1}$) à la température de (90 ± 2) °C. Cette vitesse de dépôt devient insignifiante (prises de masse inférieures à 0,1 mg.cm$^{-2}$.h$^{-1}$) pour une température inférieure à 80 °C. Enfin, il faut noter que la surface maximale que l'on peut traiter par litre de solution à 90 °C est environ d'un décimètre carré. Au-delà de cette valeur, la surface catalytique mise en contact avec le bain est trop importante pour qu'une régulation de cette activité puisse être exercée. On assiste alors à une décomposition brutale du bain.

Une difficulté à surmonter consiste en l'adaptation de ce type de bain au traitement de grandes surfaces de 10 à 50 fois supérieures à la charge surfacique maximale au litre, soit par une modification de sa composition, soit par la détermination d'un nouveau point de fonctionnement.

Une autre difficulté consiste à inclure dans le dépôt des particules d'une seconde matière telle qu'un siliciure métallique, ce qui semble impossible au vu des résultats d'une étude bibliographique réalisée par le demandeur sur les dépôts composites tant d'origine chimique (NiP + diamant, par exemple) que d'origine électrochimique (Co + WC, autre exemple). Le principe général est simple: toute particule insoluble présente dans un bain de dépôt chimique ou électrochimique peut être incluse dans le dépôt en cours de formation. Le taux de particules incluses dans le dépôt dépend de différents facteurs.

Les mécanismes d'incorporation d'une particule métallique dans un dépôt électrolytique en cours de formation ont été décrits au début des années 70 par N. Guglielmi ("Kinetics of the deposition of inert particles from electrolytic baths" in J. Electrochem. Soc., 119, 8, 1009-1012 [Août 1972]). Ce processus fait appel à deux étapes. Dans un premier temps les particules entourées d'ions et de molécules de solvant seraient légèrement adsorbées à la surface de la cathode (adsorption physique). Elles sont supposées en équilibre avec celles du bain. Puis, sous l'influence du champ électrique présent, il se créerait une forte adsorption chimique. Une fois "ancrées" à la surface de la cathode, elles seraient englobées dans la couche métallique en cours de croissance.

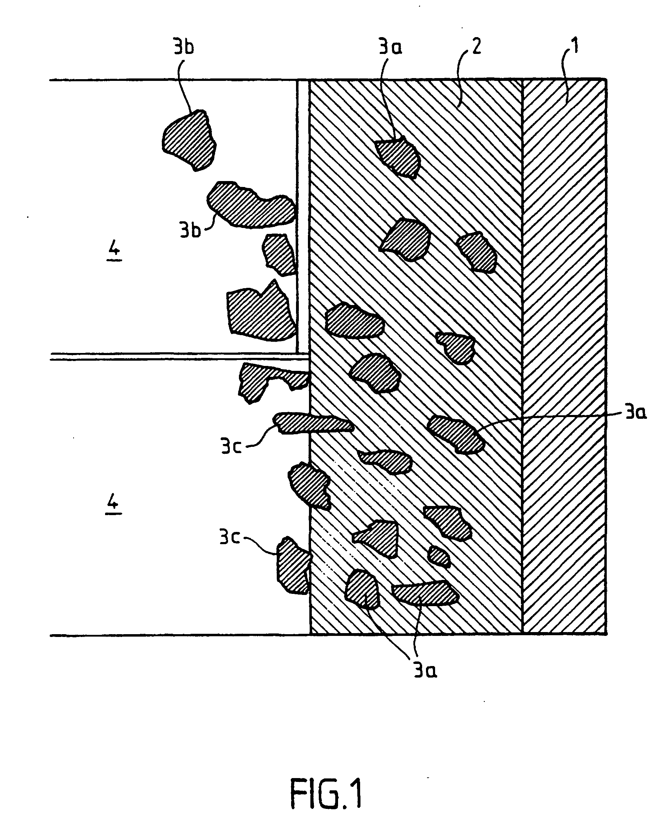

Ce mécanisme est illustré à la figure 1. Sur le substrat 1, un dépôt 2 est en cours de formation, dans laquelle sont incluses des particules 3a. Dans la partie supérieure de la figure on a représenté des particules 3b en suspension dans le bain 4, pendant l'étape d'adsorption physique. Dans la partie inférieure, des particules 3c encore en contact avec le bain sont représentées pendant l'étape d'adsorption chimique.

Il a été tiré de ces hypothèses un modèle mathématique qui permet de prévoir le taux de particules incluses dans un type de dépôt en fonction de la densité de courant appliquée. Une bonne corrélation entre le modèle mathématique et l'expérience a été prouvée pour le système cuivre/alumine par J.P. Celis & J.R. Roos ("Kinetics of the deposition of alumina particles from copper sulfate plating baths" in J. Electrochem. Soc., 124, 10, 1508-1511 [Octobre 1977]).

Pour qu'il y ait inclusion de particules dans le dépôt en cours de formation, l'application de ce modèle aux dépôts chimiques montre qu'il faut que la vitesse de croissance soit supérieure ou égale au double du rapport du diamètre moyen de la particule à inclure au temps de résidence à la surface. Appliqué à notre cas, et en considérant que le temps de résidence de la particule à inclure tend vers l'infini (ce qui, en première hypothèse, n'est jamais le cas, le temps de résidence étant généralement extrêmement court, de l'ordre de la minute), le diamètre des poudres à inclure devrait être inférieur à 2 µm.

Lorsqu'une ou plusieurs pièces massives sont traitées dans un bain de dépôt chimique autocatalytique dans les limites de la charge surfacique imposée par la chimie de la solution, il est nécessaire que la concentration en réducteur soit supérieure à un certain seuil pour que la réaction de dépôt ait lieu à une vitesse appréciable. Ce seuil est imposé par les équilibres des réactions de complexation entre le complexant et l'élément électroactif, par le potentiel redox du réducteur, par les concentrations des divers stabilisants (primaire et secondaire), par la température du bain et par le nombre de sites actifs présents à la surface du substrat.

Dans le cas d'un substrat finement divisé, le paramètre "nombre de sites actifs" augmente avec la surface spécifique du substrat. Cet état de fait entraîne une forte déstabilisation du bain qui a pour conséquence la destruction immédiate de ce dernier (tout le sel métallique électroactif est réduit en même temps). Pour pallier ce problème, il est possible de réduire la température de fonctionnement du bain et/ou d'augmenter la concentration en stabilisants et/ou d'augmenter la concentration en agent complexant et/ou de diminuer la concentration en réducteur.

L'augmentation de la concentration en stabilisants dans le bain serait préjudiciable à la qualité du dépôt obtenu. En effet, la réaction majoritaire dans le bain serait la réduction de l'eau, ce qui entraînerait l'obtention de dépôts de nickel-bore chargés en hydrogène. De plus, le stabilisant secondaire, ici l'imidazole, étant adsorbé à la surface du dépôt en cours de formation, risquerait de conduire à des dépôts de NiB chargés en carbone et en azote.

Une étude systématique de ces paramètres a conduit à la solution consistant, à concentrations en stabilisants et en complexant constantes, à abaisser la température de traitement de 92 à 80 °C et à réduire la concentration initiale en réducteur (ici $NaBH_4$) à zéro. Le borohydrure de sodium est ajouté dans le bain dès que la température de l'ensemble "bain + poudres à traiter" est stabilisée. Ces ajouts sont effectués à l'aide d'une pompe péristaltique de manière à ce que la concentration en anions $BH_4^-$ soit juste suffisante pour amorcer et entretenir la réaction de dépôt sans risquer l'emballement de cette dernière. Les conditions de fonctionnement choisies pour le bain sont données dans le tableau 2.

Tableau 2

| | |
|---|---|
| Concentration initiale en $NaBH_4$ | 0 g/l |
| Ajouts en réducteur | 0,046 $g/h/dm^2$ de poudre à traiter |
| Charge maximale admissible | 28 $dm^2$/l |
| Température de fonctionnement | 80 °C |
| Vitesse d'agitation | > 500 tours/minute |
| Durée du traitement | jusqu'à épuisement total du bain |

Pour assurer un dépôt homogène sur chaque grain de poudre, une importante agitation mécanique du bain est assurée par l'intermédiaire d'un barreau aimanté (bécher) ou par une hélice (cuve). Une agitation effectuée à l'aide d'une pompe filtrante est à proscrire pour des raisons évidentes (rétention de la poudre à traiter dans le filtre, entre autres). Cette technique permet de maintenir les poudres en suspension dans le bain, ce phénomène étant amplifié par la basicité du milieu (meilleur mouillage de toutes les surfaces en contact avec la solution). Cependant, cette agitation peut entraîner une dissolution plus rapide d'espèces gazeuses présentes dans l'atmosphère du laboratoire: le gaz carbonique et l'oxygène. Le $CO_2$ entraîne une diminution de la basicité du bain par carbonatation de la soude selon:

$$CO_2 \text{ (dissous) + NaOH} \rightarrow NaHCO_3$$

La présence d'oxygène dissous dans le bain entraîne une instabilité du réducteur. Le dépôt de nickel devient alors une réaction parasite de la réduction de l'oxygène en $OH^-$. Il faut noter que cette dernière réaction est accélérée par la carbonatation du bain: lorsque le pH diminue, l'équilibre $\frac{1}{2} O_2$ (dissous) + $H_2O$ + 2 e- → 2 $OH^-$ est en faveur de la réduction de l'oxygène dissous. De plus il est à noter que les vitesses d'agitation atteintes par ces techniques sont insuffisantes; le vortex obtenu n'est pas homogène et de la poudre s'accumule dans les angles morts (angles des cuves parallélépipédiques ou base du bécher). La conséquence de cet état de fait est l'obtention de feuilles de dépôt composite NiB + poudre dans ces angles morts ou sur le fond du bécher.

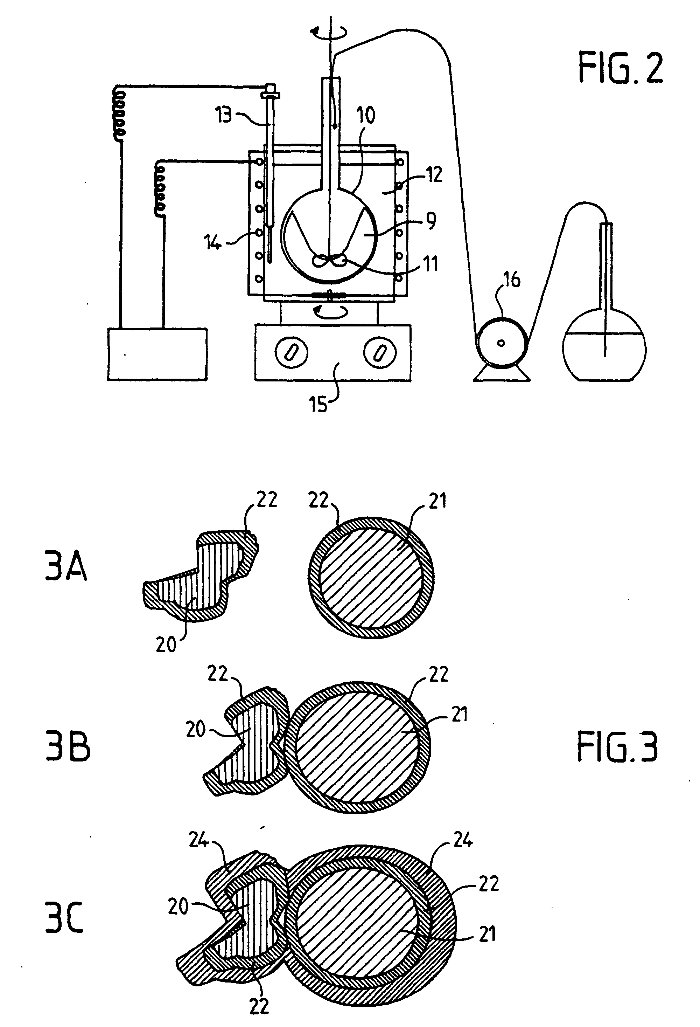

Pour pallier ces difficultés, l'invention propose de placer la suspension 9 dans un réacteur de forme non plus cylindrique mais sphérique (ballon à col), indiqué par la référence 10 sur la figure 2. L'agitation y est assurée par une hélice 11 pouvant tourner à grande vitesse (jusqu'à 800 tours par minute). Le chauffage est alors assuré par un bain-marie 12. Le fluide caloporteur utilisé est de l'eau chauffée par effet joule à une température régulée à l'aide d'un thermomètre à contact 13 qui commande une résistance chauffante 14. Le bain-marie est agité au moyen d'un agitateur magnétique 15. Ce système permet d'avoir un vortex d'agitation plus homogène et une meilleure agitation de l'ensemble bain + poudres à traiter. De plus, le confinement de l'atmosphère au-dessus du bain entraîne une moindre carbonatation de ce dernier.

Le système est complété par une alimentation en continu de réducteur à l'aide d'une pompe péristaltique 16.

Les difficultés impliquées par l'obtention d'un dépôt chimique autocatalytique de nickel-bore + siliciure métallique sur une poudre fine (diamètre ≤ 53 μm) ont pu être surmontées également grâce aux phénomènes suivants:

- Les particules à inclure dans le dépôt sont métalliques ou ont été métallisées. De ce fait elles peuvent être revêtues de nickel-bore sans prétraitement particulier.

- Dans le cas d'un dépôt chimique sur des pièces en vrac, le temps de résidence de la particule à inclure sur le dépôt en cours de formation ne dépend pas uniquement des phénomènes d'adsorption. En effet, lorsque de nombreux objets sont agités violemment dans une solution, d'une part le nombre de collisions entre eux augmente (ce qui permet la séparation des grains de poudres du superalliage à recouvrir); mais, d'autre part, il est probable que certains d'entre eux "nagent" de concert. Dans ce cas il peut y avoir une confusion des deux dépôts ("soudage" chimique) et à la fin du processus de dépôt tout se passera comme si la particule de siliciure métallique avait été enrobée dans le dépôt de nickel-bore du grain de poudre de superalliage.

- Le dépôt de nickel-bore est magnétique. Ce magnétisme tend à rassembler les grains de poudres revêtus entre eux. Mais ce phénomène d'agglomération est contrecarré par les chocs engendrés par l'agitation qui tendent à séparer les grains de poudre de superalliage. Or, si la poudre substrat est, en général, amagnétique, le siliciure de nickel (ou tout autre particule prérevêtue de nickel) présente un léger magnétisme. On peut donc imaginer que dans ce cas aussi les particules de Ni-Si + NiB qui se sont "collées" sur un grain de poudre en superalliage + NiB ne seront pas séparées de leur hôte par l'agitation.

Le mécanisme de dépôt supposé est différent de celui proposé par Guglielmi, déjà cité, et est illustré par la figure 3. Dans un premier temps 3A les particules de $M_xSi_y$ 20 (M = métal) (le siliciure pouvant être remplacé par un oxyde préalablement nickelé comme on le verra plus loin) et les grains de poudre de superalliage 21 se recouvrent de nickel-bore 22. Au cours d'une seconde étape 3B les grains de $M_xSi_y$ et de superalliage s'agglomèrent par magnétisme ou par frottement (nous n'avons pas affaire à des sphères parfaites). Au cours d'une troisième étape 3C, le dépôt continuant à s'effectuer en 24 sur le couple $M_xSi_y$ - NiB // poudre substrat - NiB, un dépôt composite NiB + $M_xSi_y$ est obtenu sur le grain de poudre substrat 21.

Pour l'obtention d'une poudre de superalliage enrobé de brasure convenant à la réparation, il est très avantageux à la fois de respecter le point de fonctionnement décrit plus haut, d'utiliser un réacteur de forme sphérique et d'effectuer une agitation suffisante (> 500 tours par minute), la poudre substrat étant traitée en même temps que celle de la troisième matière à inclure, éventuellement prétraitée.

L'importance de la forme du récipient est illustrée par l'expérience décrite ci-après.

Une solution de nickel basique (pH = 14) est fabriquée selon les concentrations spécifiées dans le tableau 1, à l'exception du borohydrure qui en est absent. On utilise pour effectuer le dépôt une cuve parallélépipédique de section 10 x 10 cm$^2$ et d'une hauteur de 15 cm. On y introduit un litre de la solution de nickel. on y installe un agitateur à hélice pouvant tourner à grande vitesse (500 tours par minute) et on place l'ensemble dans un bain-marie porté à 80 °C. Lorsque la solution de nickel atteint la température du bain-marie, on y introduit 20 g de poudre d'un superalliage disponible dans le commerce sous la dénomination Astroloy, d'une granulométrie inférieure à 53 μm (diamètre normalisé selon norme française NF X11-504), 0,5 g de poudre de siliciure de nickel d'une granulométrie inférieure à 40 μm (diamètre normalisé selon la même norme) et 0,1 g de borohydrure de sodium (NaBH$_4$) destiné à réduire les ions nickel comme il est enseigné dans FR-A-2 531 103. Au bout de 5 mn, un dégagement gazeux indique que la réaction de dépôt a commencé. Pendant l'heure que dure l'expérience, le borohydrure est ajouté régulièrement de façon à maintenir ce dégagement constant. Au terme d'une heure, l'agitation est arrêtée et le bain de nickel-bore retiré du bain-marie. Après décantation, on vidange la solution et on récupère la poudre traitée. Le fond de la cuve est nickelé et, après pesée, on constate que l'on récupère environ la moitié de la poudre qui était à traiter.

Si on examine métallographiquement la poudre ainsi traitée, on constate qu'elle est constituée de grains de poudre de superalliage (Astroloy) revêtu par environ 1 μm de nickel-bore d'une part et, d'autre part, de quelques grains de siliciure de nickel eux aussi revêtus de la même épaisseur de dépôt. L'examen du dépôt de nickel-bore recouvrant le fond de la cuve montre une structure de dépôt composite: une matrice de nickel-bore contenant une dispersion de grains de poudre d'Astroloy et de siliciure de nickel. Des analyses thermiques différentielles menées sur la poudre et sur les paillettes de dépôt composite montrent des pics endothermiques à 990 °C (fusion du NiSi) et à 1100 °C (fusion de l'eutectique NiB). On remarque cependant que les thermogrammes obtenus avec la poudre traitée ne sont pas reproductibles: le pic à 990 °C n'est pas toujours présent et sa hauteur (dépendante de la quantité de siliciure de nickel présente dans le creuset d'analyse) est variable. Ces faits montrent que la composition chimique de la brasure NiB + NiSi n'est pas constante d'un prélèvement à l'autre et, par conséquent, que nous ne sommes pas en présence d'une poudre de superalliage revêtu de brasure de type poudre de rechargement monocomposant.

On décrit ci-après quelques exemples de mise en oeuvre de l'invention.

Exemple 1

On procède comme dans l'expérience ci-dessus sauf en ce qui concerne le choix de la cuve de réaction, qui cette fois-ci est sphérique (ballon à col étroit), et les ajouts de réducteur (la solution de borohydrure de sodium) qui sont assurés par une pompe péristaltique étalonnée pour ne délivrer que 0,065 g/h par gramme de poudre à traiter (soit un apport total de 1,3 g de réducteur en 60 mn pour un bain de 1 litre et pour 20 g de poudre de superalliage + 0,5 g de NiSi). Au terme d'une heure, l'agitation est arrêtée et le bain de nickel-bore retiré du bain-marie. Après décantation, on vidange la solution et on récupère la poudre traitée. Le fond du ballon est vierge de tout dépôt et, après pesée, on constate que l'on a récupéré toute la poudre qui était à traiter.

Si on examine métallographiquement la poudre ainsi traitée on constate que tous les grains de poudre ont reçu individuellement un dépôt et que, sur une coupe métallographique polie, le dépôt de nickel-bore à la surface de chaque grain, épais d'environ 2 μm, contient au moins une particule de siliciure de nickel. Cet aspect visuel est confirmé par l'analyse thermique différentielle. Deux pics endothermiques y sont détectables, un à 990 °C (fusion de NiSi) et l'autre à 1100 °C (fusion de NiB). Les hauteurs et largeurs de ces pics sont reproductibles quel que soit le prélèvement dans le lot de poudre. Les analyses chimiques menées sur la brasure enrobant cette poudre montrent qu'elle ne contient que du nickel, du bore (4,0 % en masse) et du silicium (3,5 % en masse). Les seules impuretés détectées sont constituées d'azote (200 ppm) et d'oxygène (2000 ppm). Un lavage acide permet de réduire la teneur en oxygène présent dans la poudre de 2000 à 900 ppm, ce qui est élevé mais reste admissible pour l'application visée.

Lors des essais de réparation de parties chaudes de turbomachine aéronautique effectués avec cette poudre d'alliage réfractaire enrobée de brasure, il a été constaté que son comportement au cours du cycle de brasage (de la température ambiante à 1200 °C à la vitesse de 5 °C/mn, puis palier de 15 mn et refroidissement contrôlé jusqu'à la température ambiante à la vitesse de 10 °C/mn) était identique à celui du mélange de poudre de superalliage et de brasure actuellement utilisé par les réparateurs de moteurs d'avions. La tenue mécanique de la réparation obtenue était aussi comparable à celle habituellement constatée ainsi que sa résistance à la corrosion à 920 °C en présence de sulfate de sodium fondu ou à l'oxydation à haute température (1100 °C).

On constate donc que la poudre d'alliage réfractaire enrobé de brasure obtenue par voie chimique au cours de cet exemple présente les mêmes caractéristiques de fusion, de tenue mécanique et de résistance à la corrosion et/ou à l'oxydation que les mélanges de poudres de superalliage et de brasure habituellement utilisés, tout en évitant les fastidieuses opérations de mélange et de vérification de composition chimique préalables à chaque utilisation, puisque l'analyse chimique se fait une fois pour toutes à la suite de la fabrication de la poudre monocomposant, sa composition étant stable dans le temps et ne pouvant varier du fait de la sédimentation de ses composants comme dans l'art antérieur. Mais, à la différence de la technique antérieure, la présente invention autorise l'ajout d'éléments favorables à l'amélioration de la zone brasée en tenue mécanique ou en résistance à la corrosion sans modification du point de fusion de la brasure déposée à la surface de la poudre de superalliage et sans étude préliminaire d'une brasure spécifique.

De plus, cette technique autorise, grâce à la combinaison d'ajouts de siliciures de nature chimique différente visant à reconstituer un alliage réfractaire, l'utilisation d'une poudre de renforcement d'origine céramique de façon à créer un alliage à dispersion d'oxydes, connu sous le nom de superalliage ODS (Oxyde Dispersion Superalloy), dont la fabrication par mécanosynthèse de manière connue est très coûteuse. Ces derniers points sont illustrés par les exemples suivants.

Exemple 2

Cet exemple montre qu'il est possible de régler la fluidité de la brasure déposée à la surface du grain de superalliage par augmentation de la quantité de siliciure métallique introduite dans le dépôt de nickel-bore. On procède comme dans l'exemple 1, en utilisant 2 g de siliciure de nickel au lieu de 0,5 g, les autres conditions opératoires étant inchangées.

Si on examine métallographiquement la poudre traitée on constate que tous les grains de poudre ont reçu individuellement un dépôt et que, sur une coupe métallographique polie, le dépôt de nickel-bore à la surface de chaque grain, épais d'environ 2 $\mu$m, contient au moins une particule de siliciure de nickel. Cet aspect visuel est confirmé par l'analyse thermique différentielle. Deux pics endothermiques y sont clairement visibles, un à 990 $^\circ$C (fusion de NiSi) et l'autre à 1100 $^\circ$C (fusion de NiB); on constate en plus l'apparition d'une légère dépression endothermique à 1025 $^\circ$C due à la dissolution dans le NiSi fondu d'un peu de NiB. Les hauteurs et largeurs de ces pics sont reproductibles quel que soit le prélèvement dans le lot de poudre. Les analyses chimiques menées sur la brasure enrobant cette poudre montrent qu'elle ne contient que du nickel, du bore (4,3 % en masse) et du silicium (4,3 % en masse). Les seules impuretés détectées sont constituées d'azote (200 ppm) et d'oxygène (900 ppm).

Lors des essais de réparation de parties chaudes de turbomachine aéronautique effectués avec cette poudre d'alliage réfractaire enrobée de brasure, il a été constaté que son comportement au cours du cycle de brasage décrit dans l'exemple 1 présentait un grand intérêt pour la réparation des fissurations d'origine thermomécanique. En effet ces dernières présentent une forme de V très fermé et leur largeur varie de quelques centièmes de millimètre à la base du V à un millimètre à son sommet. Dans la technique antérieure une telle fissure était réparée en deux opérations: dans un premier temps, on rebouchait la partie étroite avec de la brasure seule puis, dans un deuxième temps, la partie large avec le mélange de poudre de superalliage et de brasure. Avec la poudre d'alliage réfractaire enrobée de brasure fabriquée au cours de cet exemple, ces deux opérations peuvent être confondues en une seule. En effet, si on introduit en large excès à l'aide d'une seringue dans la fissure une dispersion organique de la poudre monocomposant fabriquée au cours de cet exemple, selon une technique d'injection connue, et qu'on fait subir un cycle de brasage-diffusion à l'ensemble, on constate que:

- les parties étroites de la fissure sont colmatées par la brasure déposée,
- dès que la largeur de la fissure l'autorise (largeur supérieure au diamètre moyen de la poudre de superalliage non traité), il y a présence de grains de poudre de superalliage,
- à l'extérieur de la fissure on rencontre essentiellement des grains de superalliage ayant perdu une partie de leur brasure déposée chimiquement. Ces grains sont éliminés au cours des opérations de finition de la pièce réparée.

La poudre selon la présente invention permet ainsi la réunion de deux opérations distinctes dans l'art antérieur. Cet avantage s'ajoute à celui d'une poudre de composition chimique stable, les cycles thermiques à appliquer pour une opération de réparation étant inchangés, et les propriétés mécaniques équivalentes à celles obtenues dans l'art antérieur.

Les exemples 3 à 6 montrent l'introduction sous forme de siliciures d'éléments nécessaires à la reconstitution d'un superalliage: chrome, aluminium et titane. Dans les exemples 3 à 5, la teneur en silicium est la même que dans l'exemple 2.

Exemple 3

On procède comme dans l'exemple 2 (brasure à grande fluidité), en remplaçant le siliciure de nickel par l'eutectique $Cr_{44}Si_{56}$. Les poudres à traiter sont constituées de 20 g de poudre d'un superalliage de nickel disponible dans le commerce sous la dénomination IN738 et de 1,6 g de siliciure de chrome. L'analyse thermique différentielle montre deux pics endothermiques: à 1100 $^\circ$C (fusion de NiB) et à 1390 $^\circ$C (fusion de $Cr_{44}Si_{56}$); on constate également l'apparition d'une légère dépression endothermique vers 1300 $^\circ$C due à la dissolution dans le NiB fondu d'un peu de $Cr_{44}Si_{56}$. Les hauteurs et largeurs de ces pics sont reproductibles quel que soit le prélèvement dans le lot de poudre.

Exemple 4

On procède comme dans l'exemple 2 en remplaçant le siliciure de nickel par l'eutectique $Ti_{87}Si_{13}$. Les poudres à traiter sont constituées de 20 g de superalliage (IN738) et de 8,0 g de siliciure de titane. L'analyse thermique différentielle montre deux pics endothermiques: à 1100 °C (fusion de NiB) et à 1330 °C (fusion de $Ti_{87}Si_{13}$); on constate l'apparition d'une légère dépression endothermique vers 1300 °C due à la dissolution dans le NiB fondu d'un peu de $Ti_{87}Si_{13}$. Les hauteurs et largeurs de ces pics sont reproductibles quel que soit le prélèvement dans le lot de poudre.

Exemple 5

On procède comme dans l'exemple 2 en remplaçant le siliciure de nickel par l'eutectique $Al_{87,8}Si_{12,2}$. Les poudres à traiter sont constituées de 20 g de superalliage (IN738) et de 5,1 g de siliciure d'aluminium prétraité. Le prétraitement du siliciure d'aluminium consiste à enrober cette poudre par du zinc comme il est bien connu de l'homme de l'art (dépôt de zinc par déplacement en bain dit de "zincate" construit à partir d'oxyde de zinc et de soude) puis par un prédépôt de nickel-bore obtenu en milieu neutre comme il est décrit dans FR-A-2 531 103. L'ensemble des deux poudres (superalliage et siliciure d'aluminium prétraité) est placé dans le réacteur comme il est décrit dans l'exemple 1. L'analyse thermique différentielle montre deux pics endothermiques: à 580 °C (fusion de $Al_{87,8}Si_{12,2}$) et à 1100 °C (fusion de NiB); on constate également l'apparition d'une légère dépression endothermique vers 1000 °C due à la dissolution dans $Al_{87,8}Si_{12,2}$ fondu d'un peu de NiB. Les hauteurs et largeurs de ces pics sont reproductibles quel que soit le prélèvement dans le lot de poudre.

Exemple 6

On procède comme dans l'exemple 2 en remplaçant le siliciure de nickel par 0,4 g de siliciure de chrome, 0,8 g de siliciure de titane et 1 g de siliciure d'aluminium préalablement revêtu de nickel-bore. L'examen métallographique de la poudre obtenue montre que chaque grain de poudre d'IN738 possède au moins une particule de siliciure incluse dans le dépôt de nickel-bore. L'analyse thermique différentielle montre 3 pics endothermiques: à 580 °C (fusion du siliciure d'aluminium, à 1100 °C (fusion du borure de nickel) et à 1350 °C (fusion des siliciures de titane et de chrome). On constate une dissolution des différents siliciures ou borures dans la phase liquide déjà formée.

Un prélèvement de 10 grammes de la poudre ainsi fabriquée a été placé dans un creuset en alumine. L'ensemble a été porté, sous une pression inférieure à $5 \times 10^{-4}$ Torr, à 1200 °C pendant 16 heures. A l'issue de l'expérience le lingot obtenu a été découpé, poli et observé par microscopie optique. On y a constaté que les grains de poudre de superalliage étaient liés entre eux par un alliage à base de nickel contenant du chrome, du titane et de l'aluminium. La structure de l'IN738 est peu altérée. Cet état de fait s'explique par la non-diffusion des éléments constitutifs du superalliage de renfort vers la brasure, ce qui est nouveau par rapport à l'art antérieur. Cependant, il n'a pas été mis en évidence une structure de superalliage au niveau de la brasure proprement dite.

Dans les exemples 7 à 9, le silicium est combiné à un élément destiné à renforcer la tenue à l'oxydation du joint brasé.

Exemple 7

On procède comme dans l'exemple 1 en remplaçant les 500 mg de NiSi par 3,2 g de $Re_2Si$, soit une mole pour une mole pour une brasure dite normale (une quantité de 12,9 g conduirait à une brasure dite fluide, analogue à celle de l'exemple 2). Au terme d'une heure, l'agitation est arrêtée et le bain de nickel-bore retiré du bain-marie. Après décantation, on vidange la solution et on récupère la poudre traitée. Le fond du ballon est vierge de tout dépôt et, après pesée, on constate que l'on a récupéré toute la poudre qui était à traiter.

Si on examine métallographiquement la poudre ainsi traitée on constate que tous les grains de poudre ont reçu individuellement un dépôt et que, sur une coupe métallographique polie, le dépôt de nickel-bore à la surface de chaque grain, épais d'environ 2 μm, contient au moins une particule de siliciure de rhénium. Cet aspect visuel est confirmé par l'analyse thermique différentielle. Le pic endothermique de la fusion du NiB (1100 °C) est le seul visible, la fusion du siliciure de rhénium ayant lieu selon la réaction eutectique: $Re + Re_2Si \rightarrow$ liquide à 1710 °C. Cependant, on constate qu'il est plus évasé que lors de la fusion du dépôt de nickel-bore seul. Ce fait est dû à la dissolution du siliciure de rhénium dans le borure de nickel liquide. La hauteur et la largeur de ce pic sont reproductibles quel que soit le prélèvement dans le lot de poudre. Les analyses chimiques menées sur la brasure enrobant cette poudre montrent qu'elle ne contient que du nickel, du bore, du rhénium et du silicium. Comme dans l'exemple 1, les seules impuretés détectées sont l'azote et l'oxygène.

Une éprouvette en superalliage IN738 préalablement fissurée a été réparée à l'aide de cette poudre. Un test d'oxydation cyclique à 1100 °C sous air a montré que le superalliage était endommagé plus rapidement que la réparation faite avec la poudre monocomposant constituée d'IN738 enrobé de NiB + Re$_2$Si, alors que la réparation de l'exemple 1 est moins résistante que l'alliage dans les mêmes conditions.

### Exemple 8

On procède comme dans l'exemple 1 en remplaçant les 500 mg de NiSi par 3,2 g de Pd$_5$Si, soit une mole pour une mole pour une brasure dite normale (une quantité de 12,9 g conduirait à une brasure dite fluide, analogue à celle de l'exemple 2). Au terme d'une heure, l'agitation est arrêtée et le bain de nickel-bore retiré du bain-marie. Après décantation, on vidange la solution et on récupère la poudre traitée. Le fond du ballon est vierge de tout dépôt et, après pesée, on constate que l'on a récupéré toute la poudre qui était à traiter.

Si on examine métallographiquement la poudre ainsi traitée on constate que tous les grains de poudre ont reçu individuellement un dépôt et que, sur une coupe métallographique polie, le dépôt de nickel-bore à la surface de chaque grain, épais d'environ 2 μm, contient au moins une particule de siliciure de palladium. Cet aspect visuel est confirmé par l'analyse thermique différentielle. Deux pics endothermiques y sont clairement visibles, un à 835 °C (fusion de Pd$_5$Si) et l'autre à 1100 °C (fusion de NiB); on constate également l'apparition d'une légère dépression endothermique vers 1000 °C due à la dissolution dans le Pd$_5$Si fondu d'un peu de NiB. Les hauteurs et largeurs de pics sont reproductibles quel que soit le prélèvement dans le lot de poudre. Les analyses chimiques menées sur la brasure enrobant cette poudre montrent qu'elle ne contient que du nickel, du bore, du palladium et du silicium. Comme dans l'exemple 1, les seules impuretés détectées sont l'azote et l'oxygène.

Une éprouvette en superalliage IN738 préalablement fissurée a été réparée à l'aide de cette poudre. Un test d'oxydation cyclique à 1100 °C sous air a montré que le superalliage était endommagé plus rapidement que la réparation faite avec la poudre monocomposant.

### Exemple 9

On procède comme dans l'exemple 1 en remplaçant les 500 mg de NiSi par 3,9 g d'une poudre de siliciure de platine de composition Pt 77 % Si 23 % en atomes (une quantité de 15,7 g conduirait à une brasure dite fluide, analogue à celle de l'exemple 2). Au terme d'une heure, l'agitation est arrêtée et le bain de nickel-bore retiré du bain-marie. Après décantation, on vidange la solution et on récupère la poudre traitée. Le fond du ballon est vierge de tout dépôt et, après pesée, on constate que l'on a récupéré toute la poudre qui était à traiter.

Si on examine métallographiquement la poudre ainsi traitée on constate que tous les grains de poudre ont reçu individuellement un dépôt et que, sur une coupe métallographique polie, le dépôt de nickel-bore à la surface de chaque grain, épais d'environ 2 μm, contient au moins une particule de siliciure de platine. Cet aspect visuel est confirmé par l'analyse thermique différentielle. Deux pics endothermiques y sont clairement visibles, un à 830 °C (réaction Pt + β-Pt$_3$Si →liquide, fusion eutectique) et l'autre à 1100 °C (fusion de NiB); on constate l'apparition d'une légère dépression endothermique vers 1000 °C due à la dissolution dans le Pt$_3$Si fondu d'un peu de NiB. Les hauteurs et largeurs de pics sont reproductibles quel que soit le prélèvement dans le lot de poudre. Les analyses chimiques menées sur la brasure enrobant cette poudre montrent qu'elle ne contient que du nickel, du bore, du platine et du silicium. Comme dans l'exemple 1, les seules impuretés détectées sont l'azote et l'oxygène.

Une éprouvette en superalliage IN738 préalablement fissurée a été réparée à l'aide de cette poudre. Un test d'oxydation cyclique à 1100 °C sous air a montré que le superalliage était endommagé plus rapidement que la réparation faite avec la poudre.

Dans les exemples 10 et 11, on utilise un oxyde finement divisé, à savoir l'yttrine (Y$_2$O$_3$) pour renforcer les propriétés mécaniques (notamment en fluage) et la résistance à l'oxydation du joint brasé.

### Exemple 10

Si, dans la procédure de l'exemple 1, on remplace le siliciure par de l'yttrine, on obtient un mélange de poudre de superalliage revêtue d'une couche uniforme de nickel-bore et d'yttrine non revêtue. Pour être revêtue, la poudre céramique doit recevoir un prétraitement rendant sa surface métallique.

À cet effet, la poudre d'yttrine est préalablement lavée avec de l'hydrazine monohydratée (N$_2$H$_4$, H$_2$O) pendant 5 mn, puis, après récupération, pendant 5 mn par une solution acide (pH$_{(HCl)}$ = 2) contenant 5 g/l de chlorure de palladium (PdCl$_2$). Cette technique permet d'implanter des atomes de palladium métallique à la surface de chaque grain de poudre de céramique. Après récupération et rinçage à l'eau désionisée, la poudre est revêtue d'environ 0,1 μm de nickel-bore par la technique de dépôt utilisée habituellement dans la présente invention. Après un nouveau rinçage à l'eau désionisée la poudre de céramique est utilisée comme une poudre de renfort, à la place du superalliage mis en oeuvre dans les exemples précédents.

On procède alors comme dans l'exemple 1, en remplaçant la poudre de superalliage par la poudre d'yttrine préalablement nickelée. La cuve réacteur est sphérique (ballon à col étroit) et les ajouts de réducteur (la solution de borohydrure de sodium) sont assurés par une pompe péristaltique étalonnée pour ne délivrer que 0,065 g/h par gramme de poudre à traiter (soit un apport total de 1,3 g de réducteur en 60 mn pour un bain de 1 litre et pour 20 g de poudre d'yttrine nickelée + 0,5 g de NiSi). Au terme d'une heure, l'agitation est arrêtée et le bain de nickel-bore retiré du bain-marie. Après décantation, on vidange la solution et on récupère la poudre traitée. Le fond du ballon est vierge de tout dépôt et, après pesée, on constate que l'on a récupéré toute la poudre qui était à traiter.

Si on examine métallographiquement la poudre ainsi traitée on constate que tous les grains de poudre céramique ont reçu, outre le dépôt initial de nickel-bore, un dépôt composite de NiB + NiSi. Une éprouvette en IN738 préalablement fissurée a été réparée avec cette poudre. Après un traitement thermique de 6 heures à 1200 °C sous hydrogène, une coupe métallographique montre une interface substrat-réparation perturbée par l'interdiffusion des éléments du substrat vers la brasure d'une part et des éléments fondants de la brasure vers le substrat d'autre part. La fissure "réparée" présente une dispersion homogène de grains de poudre d'yttrine moins dense que souhaitée, une partie des grains céramiques ayant été rejetée dans le "laitier". Après usinage de finition, comme il est généralement pratiqué pour ce type de réparation, l'alliage est exposé à une oxydation cyclique à 1100 °C. On constate alors une meilleure résistance à l'oxydation à haute température pour le joint brasé que pour le substrat.

Exemple 11

Dans cet exemple, on procède comme dans l'exemple 1, en utilisant la poudre d'yttrine nickelée obtenue dans l'exemple 10 à la place du siliciure. Il montre que l'invention permet d'incorporer différents types de particules dans le dépôt chimique autocatalytique.

L'examen sur coupe métallographique polie montre que chaque grain de superalliage IN738 est revêtu d'environ 2 μm de nickel-bore contenant au moins une particule d'oxyde.

Les exemples ci-dessus sont axés sur les techniques aéronautiques pour lesquelles les poudres de brasage selon l'invention ont été mises au point. Cependant la technique du dépôt composite sur un substrat finement divisé peut être appliquée à d'autres dépôts chimiques autocatalytiques (nickel-phosphore, par exemple) en incorporant n'importe quelle particule pourvu qu'elle soit insoluble (ou rendue insoluble) dans la solution de dépôt d'une part et, d'autre part, qu'elle soit préparée pour son inclusion dans le dépôt (dégraissée, le cas échéant prérevêtue d'un dépôt conducteur de l'électricité, etc.).

**Revendications**

**1.** Poudre composite dont chaque grain comprend une âme (21) en une première matière qui est un alliage métallique, enrobée d'un revêtement (22, 24) d'une seconde matière, la composition chimique de la première matière et la composition chimique de la seconde matière étant sensiblement constantes d'un grain à l'autre, et, dans une partie au moins des grains représentant la majorité de la masse de la poudre, au moins une particule (20) d'une troisième matière étant incluse dans le revêtement, la composition chimique de la troisième matière étant sensiblement constante d'un grain à l'autre.

**2.** Poudre selon la revendication 1, **caractérisée en ce qu'**au moins une particule de la troisième matière est incluse dans le revêtement de chaque grain.

**3.** Poudre selon la revendication 1, **caractérisée en ce que** la première matière est un superalliage à base de nickel et/ou de cobalt.

**4.** Poudre selon l'une des revendications 1 et 2, **caractérisée en ce que** la première matière est une céramique réfractaire.

**5.** Poudre selon l'une des revendications précédentes, **caractérisée en ce que** la seconde matière est une brasure propre à fondre dans un domaine de température où la première matière ne subit pratiquement aucune transformation physique ou chimique.

**6.** Poudre selon l'une des revendications précédentes, **caractérisée en ce que** la troisième matière est propre à fondre ou à réagir avec la seconde matière pour former une brasure à l'état liquide, dans un domaine de température où la première matière ne subit pratiquement aucune transformation physique ou chimique.

**7.** Poudre selon la revendication 6, **caractérisée en ce que** la troisième matière contient du silicium en tant qu'élément fondant.

8. Poudre selon l'une des revendications 5 à 7, **caractérisée en ce que** le revêtement est un dépôt chimique autocatalytique contenant du nickel et/ou du cobalt et un élément fondant choisi parmi le bore et le phosphore, obtenu à partir d'une solution contenant des ions nickel et/ou cobalt et un composé dudit élément fondant en tant que réducteur.

9. Procédé de fabrication d'une poudre selon la revendication 8, dans lequel on met en suspension, avec agitation, des particules de la première matière et des particules de la troisième matière dans une solution contenant des ions nickel et/ou cobalt et les autres constituants nécessaires au dépôt autocatalytique à l'exception du réducteur, et on ajoute progressivement le réducteur de manière à former autour de chaque particule de la première matière un revêtement de la seconde matière, les particules de la troisième matière étant incluses dans ledit revêtement.

10. Procédé selon la revendication 9, **caractérisé en ce que** la suspension agitée (9) est contenue dans un récipient (10) dont la paroi en contact avec elle est sensiblement sphérique.

11. Procédé selon l'une des revendications 9 et 10, **caractérisé en ce que** lesdits autres constituants comprennent au moins un complexant desdits ions et au moins un stabilisant organique soluble dans l'eau ne contenant ni soufre ni aucun métal ou métalloïde des groupes IIIa (bore et aluminium exceptés), IVa (carbone excepté), Va (azote et phosphore exceptés), VIa (oxygène excepté) et VIIa (fluor et chlore exceptés), et possédant un doublet électronique pouvant être facilement capté par le nickel et/ou le cobalt.

12. Procédé selon la revendication 11, **caractérisé en ce que** le bain contient les constituants suivants:

source d'ions: chlorure de nickel
complexant: éthylènediamine
stabilisants: pentoxyde d'arsenic imidazole
agent d'alcalinité: hydroxyde de sodium,

le réducteur étant le borohydrure de sodium.

13. Procédé selon la revendication 12, **caractérisé en ce que** le bain est porté à une température d'environ 80 °C.

14. Procédé selon l'une des revendications 12 et 13, **caractérisé en ce que** le réducteur est ajouté à une vitesse ne dépassant pas 0,07 gramme par heure et par gramme de particules en suspension.

15. Utilisation d'une poudre selon l'une des revendications 5 et 8 pour la réparation par brasage-diffusion d'une pièce fissurée, dans laquelle on remplit les fissures de ladite poudre et on chauffe la pièce dans ledit domaine de température jusqu'à ce que la brasure, après avoir fondu, se solidifie de nouveau par suite de la diffusion de l'élément fondant dans la matière de l'âme et dans la matière de la pièce à réparer.

16. Utilisation selon la revendication 15 d'une poudre selon la revendication 8, rattachée aux revendications 3 et 7, dans laquelle la seconde matière est un alliage de nickel, et/ou de cobalt, et de bore, pour la réparation d'une pièce de moteur aéronautique en superalliage à base de nickel et/ou de cobalt.

**Patentansprüche**

1. Composit-Pulver, bei dem jedes Körnchen einen Kern (21) aus einem ersten Material, bei dem es sich um eine Metalllegierung handelt, aufweist, der von einem Überzug (22, 24) aus einem zweiten Material umhüllt ist, wobei die chemische Zusammensetzung des ersten Materials und die chemische Zusammensetzung des zweiten Materials von Korn zu Korn im Wesentlichen konstant sind, und wobei mindestens bei einem Teil der Körnchen, die den überwiegenden Anteil der Pulvermasse darstellen, mindestens ein Teilchen (20) aus einem dritten Material in dem Überzug eingeschlossen ist, wobei die chemische Zusammensetzung des dritten Materials von Korn zu Korn im Wesentlichen konstant ist.

2. Pulver nach Anspruch 1, **dadurch gekennzeichnet, dass** mindestens ein Teilchen aus dem dritten Material in dem Überzug jedes Körnchens eingeschlossen ist.

3.  Pulver nach Anspruch 1, **dadurch gekennzeichnet, dass** das erste Material eine Superlegierung auf Basis von Nickel und/oder Kobalt ist.

4.  Pulver nach einem der Ansprüche 1 und 2, **dadurch gekennzeichnet, dass** das erste Material eine feuerbeständige Keramik ist.

5.  Pulver nach einem der vorhergehenden Ansprüche, **dadurch gekennzeichnet, dass** das zweite Material ein Lötmittel (Lötmetall) ist, das in einem Temperaturbereich schmelzen kann, in dem das erste Material praktisch keine physikalische oder chemische Umwandlung erfährt.

6.  Pulver nach einem der vorhergehenden Ansprüche, **dadurch gekennzeichnet, dass** das dritte Material in einem Temperaturbereich, in dem das erste Material praktisch keine physikalische oder chemische Umwandlung erfährt, schmelzen kann oder mit dem zweiten Material unter Bildung eines Lötmittels (Lötmetalls) im flüssigen Zustand reagieren kann.

7.  Pulver nach Anspruch 6, **dadurch gekennzeichnet, dass** das dritte Material Silicium als Flussmittel enthält.

8.  Pulver nach einem der Ansprüche 5 bis 7, **dadurch gekennzeichnet, dass** der Überzug eine autokatalytische chemische Abscheidung ist, die Nickel und/oder Kobalt und ein Flussmittel ausgewählt aus Bor und Phosphor, enthält, die unter Verwendung einer Lösung, die Nickel- und/oder Kobaltionen und eine Verbindung des genannten Flussmittels als Reduktionsmittel enthält, hergestellt worden ist.

9.  Verfahren zur Herstellung eines Pulvers nach Anspruch 8, bei dem man unter Rühren Teilchen aus dem ersten Material und Teilchen aus dem dritten Material in einer Lösung suspendiert, die Nickel- und/oder Kobaltionen und die übrigen Bestandteile enthält, die erforderlich sind für die autokatalytische Abscheidung mit Ausnahme des Reduktionsmittels, und bei dem man das Reduktionsmittel progressiv so zugibt, dass um jedes Teilchen aus dem ersten Material herum ein Überzug aus dem zweiten Material gebildet wird, wobei die Teilchen aus dem dritten Material in diesen Überzug eingeschlossen werden.

10. Verfahren nach Anspruch 9, **dadurch gekennzeichnet, dass** die gerührte Suspension (9) in einem Behälter (10) enthalten ist, dessen Wand, die mit ihr in Kontakt steht, im Wesentlichen kugelförmig ist.

11. Verfahren nach einem der Ansprüche 9 und 10, **dadurch gekennzeichnet, dass** die genannten übrigen Bestandteile mindestens einen Komplexbildner für die genannten Ionen und mindestens ein in Wasser lösliches organisches Stabilisierungsmittel enthalten, das weder Schwefel noch irgendein Metall oder Metalloid der Gruppe IIIa (ausgenommen Bor und Aluminium), IVa (ausgenommen Kohlenstoff), Va (ausgenommen Stickstoff und Phosphor), VIa (ausgenommen Sauerstoff) und VIIa (ausgenommen Fluor und Chlor) enthält und ein Elektronenpaar aufweist, das von Nickel und/oder Kobalt leicht eingefangen werden kann.

12. Verfahren nach Anspruch 11, **dadurch gekennzeichnet, dass** das Bad die folgenden Bestandteile enthält:

    | | |
    |---|---|
    | Ionenquelle: | Nickelchlorid |
    | Komplexbildner: | Ethylendiamin |
    | Stabilisierungsmittel: | Arsenpentoxid Imidazol |
    | alkalisch machendes Agens: | Natriumhydroxid, |

    wobei das Reduktionsmittel Natriumborhydrid ist.

13. Verfahren nach Anspruch 12, **dadurch gekennzeichnet, dass** das Bad auf eine Temperatur von etwa 80 °C gebracht wird.

14. Verfahren nach einem der Ansprüche 12 und 13, **dadurch gekennzeichnet, dass** das Reduktionsmittel mit einer Geschwindigkeit zugegeben wird, die 0,07 g pro Stunde und pro Gramm der Teilchen in der Suspension nicht übersteigt.

15. Verwendung eines Pulvers nach einem der Ansprüche 5 und 8 zur Reparatur eines rissigen Teils durch Diffusions-(Hart)Löten, bei der man die Risse mit dem genannten Pulver auffüllt und das Teil in dem genannten Temperaturbereich erwärmt, bis das Lötmaterial (Lötmetall) nach dem Schmelzen sich wieder verfestigt als Folge der Diffusion des Flussmittels in das Material des Kerns und in das Material des zu reparierenden Teils.

16. Verwendung nach Anspruch 15 eines Pulvers nach Anspruch 8 in Verbindung mit den Ansprüchen 3 und 7, bei der das zweite Material eine Legierung von Nickel und/oder Kobalt und Bor ist, zur Reparatur eines Teils eines Flugzeugmotors aus einer Superlegierung auf Basis von Nickel und/oder Kobalt.

**Claims**

1. Composite powder, each grain of which comprises a core (21) of a first material which is a metal alloy, which core (21) is covered with a coating (22, 24) of a second material, the chemical composition of the first material and the chemical composition of the second material being substantially constant from one grain to another, and, in at least a portion of the grains representing the majority of the mass of the powder, at least one particle (20) of a third material being included in the coating, the chemical composition of the third material being substantially constant from one grain to another.

2. Powder according to claim 1, **characterised in that** at least one particle of the third material is included in the coating of each grain.

3. Powder according to claim 1, **characterised in that** the first material is a superalloy based on nickel and/or cobalt.

4. Powder according to either claim 1 or claim 2, **characterised in that** the first material is a refractory ceramics material.

5. Powder according to any one of the preceding claims, **characterised in that** the second material is a brazing solder capable of melting in a temperature range in which the first material undergoes virtually no physical or chemical change.

6. Powder according to any one of the preceding claims, **characterised in that** the third material is capable of melting or of reacting with the second material to form a brazing solder in the liquid state, in a temperature range in which the first material undergoes virtually no physical or chemical change.

7. Powder according to claim 6, **characterised in that** the third material contains silicon as fluxing agent.

8. Powder according to any one of claims 5 to 7, **characterised in that** the coating is an autocatalytic chemical deposit containing nickel and/or cobalt and a fluxing agent selected from boron and phosphorus, obtained from a solution containing nickel ions and/or cobalt ions and a compound of said fluxing agent as reducing agent.

9. Process for the production of a powder according to claim 8, in which particles of the first material and particles of the third material are suspended, with stirring, in a solution containing nickel ions and/or cobalt ions and the other constituents necessary for the autocatalytic deposition, except for the reducing agent, and the reducing agent is added gradually in such a manner that a coating of the second material forms around each particle of the first material, the particles of the third material being included in said coating.

10. Process according to claim 9, **characterised in that** the stirred suspension (9) is contained in a vessel (10) whose wall in contact with the suspension is substantially spherical.

11. Process according to either claim 9 or claim 10, **characterised in that** said other constituents include at least one complexing agent for said ions and at least one water-soluble organic stabiliser containing neither sulfur nor any metal or metalloid of groups IIIa (with the exception of boron and aluminium), IVa (with the exception of carbon), Va (with the exception of nitrogen and phosphorus), VIa (with the exception of oxygen) and VIIa (with the exception of fluorine and chlorine) and having a duplet which can readily be captured by the nickel and/or cobalt.

12. Process according to claim 11, **characterised in that** the bath contains the following constituents:

| | |
|---|---|
| ion source: | nickel chloride |
| complexing agent: | ethylenediamine |
| stabilisers: | arsenic pentoxide imidazole |

alkalinity agent: sodium hydroxide,

the reducing agent being sodium borohydride.

13. Process according to claim 12, **characterised in that** the bath is brought to a temperature of about 80 °C.

14. Process according to either claim 12 or claim 13, **characterised in that** the reducing agent is added at a rate not exceeding 0.07 gram per hour and per gram of particles in suspension.

15. Use of a powder according to either claim 5 or claim 8 in the repair of a cracked component by diffusion brazing, in which the cracks are filled with said powder and the component is heated in said temperature range until the brazing solder, after melting, solidifies again as a result of the diffusion of the fluxing agent into the material of the core and into the material of the component to be repaired.

16. Use according to claim 15 of a powder according to claim 8, appended to claims 3 and 7, in which the second material is an alloy of nickel, and/or of cobalt, and boron, in the repair of an aeronautical engine component made of a superalloy based on nickel and/or cobalt.

FIG.1

FIG.2

3A

3B

3C

FIG.3